# EUROPÄISCHE PATENTANMELDUNG

(11) **EP 4 029 641 A1**
(43) Veröffentlichungstag der Anmeldung: **20.07.2022**
(21) Anmeldenummer: 21218268.7
(22) Anmeldetag: 30.12.2021
(51) Int. Cl.: B23K 26/035, B23K 26/08, B23K 26/22, B23K 26/244, B23K 26/36, B23Q 3/06

(54) **LASERBEARBEITUNGSANLAGE**

(30) Priorität: 14.01.2021 DE 202021100154 U
(71) Anmelder: BBW Lasertechnik GmbH, 83134 Prutting (DE)
(72) Erfinder: Niemczyk, Gregor, 83128 Halfing (DE)
(74) Vertreter: Charrier Rapp & Liebau

(57) **Zusammenfassung**

Die Erfindung betrifft eine Laserbearbeitungsanlage mit einer Werkstückauflage (2) für die Aufnahme eines zu bearbeitenden Werkstücks (14), einer Werkstückhalteeinrichtung (3) zur Halterung des zu bearbeitenden Werkstücks (14) und einem relativ zur Werkstückauflage (2) verfahrbaren Bearbeitungskopf (4), an dem eine Laseroptik (7) zur Fokussierung eines Laserstrahls (11) auf das zu bearbeitende Werkstück (14) angeordnet ist, wobei die Werkstückhalteeinrichtung (3) ein am Bearbeitungskopf (4) angeordnetes Andruckelement (12) mit einem zur Auflage auf dem Werkstück (14) im Bereich der Fokuslage des Laserstrahls (11) gelangenden Andruckkopf (13) enthält. Das Andruckelement (12) ist über eine Linearführung (17, 18, 19) vertikal verschiebbar am Bearbeitungskopf (4) angeordnet.

## Beschreibung

Die Erfindung betrifft eine Laserbearbeitungsanlage nach dem Oberbegriff des Anspruchs 1.

Derartige Laserbearbeitungsanlagen werden zur zwei- oder dreidimensionalen Schneid- und Schweißbearbeitung eingesetzt. Sie weisen üblicherweise eine Werkstückauflage für die Aufnahme eines zu bearbeitenden Werkstücks, eine Werkstückhalteeinrichtung zur Halterung des zu bearbeitenden Werkstücks und einen relativ zur Werkstückauflage verfahrbaren Bearbeitungskopf mit einer daran angeordneten Laseroptik zur Fokussierung eines Laserstrahls auf das zu bearbeitende Werkstück auf. Bei solchen Laserbearbeitungsanlagen werden die zu bearbeitenden Werkstücke üblicherweise durch stationär auf der Werkstückauflage angeordnete Werkstückhalterungen oder Spanneinrichtungen gehalten und fixiert. Allerdings sind die Spannmöglichkeiten von solchen stationären Werkstückhalterungen beschränkt. Insbesondere beim Laserschweißen kann sich das Problem ergeben, dass die Fügeteile an den Schweißstellen nicht ausreichend zusammengedrückt sind und sich somit unerwünschte Spalte zwischen den zu fügenden Teilen ergeben.

Aus der DE 102 47 438 A1 ist eine gattungsgemäße Laserbearbeitungsanlage bekannt. Bei der dort offenbarten Laser-Schweißvorrichtung ist an einer als Sechsachsroboter ausgebildeten Verschiebeeinrichtung eine Laser-Schweißoptik angeordnet. Starr mit der Laser-Schweißoptik verbunden ist ein als Andrückrolle ausgebildetes Anpresselement, so dass die Laser-Schweißoptik und das Anpresselement gemeinsam durch die Verschiebeeinrichtung bewegt werden.

Aufgabe der Erfindung ist es, eine Laserbearbeitungsanlage der eingangs genannten Art zu schaffen, die ein einfaches und sicheres Spannen der Werkstücke in unmittelbarer Nähe der Bearbeitungsstelle ermöglicht.

Diese Aufgabe wird durch eine Laserbearbeitungsanlage mit den Merkmalen des Anspruchs 1 gelöst. Vorteilhafte Ausgestaltungen und zweckmäßige Weiterbildungen der Erfindung sind in den Unteransprüchen angegeben.

Bei der erfindungsgemäßen Laserbearbeitungsanlage weist die Werkstückhalteeinrichtung ein am Bearbeitungskopf über eine Linearführung vertikal verschiebbar angeordnetes Andruckelement mit einem zur Auflage auf dem Werkstück im Bereich der Fokuslage des Laserstrahls gelangenden Andruckkopf auf. Dadurch kann eine Andruckkraft zur ordnungsgemäßen und sicheren Halterung der Werkstücke in unmittelbarer Nähe der Bearbeitungsstelle erfolgen. Bei der Durchführung einer Schweißbearbeitung können so z.B. die Fügepartner mit einer definierten Andruckkraft zusammengedrückt werden, so dass eine möglichst spaltfreie Fügestelle entsteht. Dadurch kann die Bearbeitungsqualität erheblich verbessert werden. Das Andruckelement wird gemeinsam mit dem Bearbeitungskopf in unmittelbarer Nähe der Bearbeitungsstelle positioniert, so dass an jeder Bearbeitungsstelle eine optimale Verbindung erreicht werden kann.

Das Andruckelement ist vorzugsweise derart ausgebildet ist, dass der Andruckkopf im Bereich der Fokuslage des durch die Laseroptik auf das Werkstück fokussierten Laserstrahls angeordnet ist. Hierzu kann das Andruckelement einen bogenförmigen Verlauf aufweisen.

Die Linearführung weist zweckmäßigerweise einen am Bearbeitungskopf angeordneten Führungskörper und einen am Führungskörper über Führungsschienen verschiebbar geführten Führungsschlitten auf. Das Andruckelement kann über einen Aufnahmekörper an dem Führungsschlitten befestigt sein. Der Aufnahmekörper kann so ausgestaltet sein, dass das Andruckelement bei Bedarf gewechselt bzw. ausgetauscht werden kann. Die Linearführung kann als Gleitführung ausgeführt sein.

An der Linearführung ist zweckmäßigerweise eine Mess- und Anzeigeeinrichtung zur Erfassung und Anzeige der Bewegung des Andruckelements gegenüber dem Bearbeitungskopf angeordnet. Durch eine derartige Mess- und Anzeigeeinrichtung kann der Abstand des Bearbeitungskopfs vom Werkstück und damit die Fokuslage indirekt erfasst und kontrolliert werden. Bei Bedarf kann so die vertikale Position des Bearbeitungskopfs in der Z-Achse korrigiert und nachjustiert werden. Bei der Mess- und Anzeigeeinrichtung kann es sich z.B. um einen mechanischen Messtaster handeln. Es kann aber auch eine elektronische Messeinrichtung mit einem elektrischen Positions- bzw. Lagesensor und einer elektrischen Anzeigeeinrichtung zum Einsatz gelangen. Die durch die Mess- und Anzeigeeinrichtung erfassten Daten können bei Bedarf auch dokumentiert und zur Qualitätskontrolle und Nachverfolgung abgespeichert werden. Die Mess- und Anzeigeeinrichtung kann auch an einer anderen Stelle als an der Linearführung angeordnet sein. So kann z.B. auch eine direkte Messung auf das Bauteil mittels eines Linienlasers durch eine Scanner-Optik erfolgen. Die Auswertung der Messdaten inklusive automatischer Nachjustierung der Z-Position (Fokuslage) ist auch durch die Maschinensoftware realisierbar.

In einer vorteilhaften Ausführungsform kann dem Andruckelement ein z.B. als Feder ausgebildetes Druckerzeugungselement zur Erzeugung eines Anpressdrucks zugeordnet sein. Durch das als Feder ausgebildete Druckerzeugungselement kann ein Höherausgleich des Andruckelements erreicht und eine definierte Anpresskraft sichergestellt werden. Anstelle einer Feder könnte auch ein druckmittelbetätigter Kolben oder ein elektrischer Stellantrieb zum Einsatz gelangen.

Der Bearbeitungskopf des Andruckelements kann an die jeweilige Bearbeitungsaufgabe angepasst sein. Er kann z.B. einen Durchgang für den Laserstrahl aufweisen. Dadurch kann ein zu schweißendes Werkstück um die Schweißstelle herum durchgängig angedrückt werden. Somit ist an der Schweißstelle ein durchgehender und positionsgenauer Anpressdruck zur spaltfreien Verbindung erreichbar.

Der Andruckkopf kann ringförmig ausgebildet sein und eine kreisringförmige untere Andruckfläche aufweisen. Der Andruckkopf kann aber auch blockförmig ausgebildet sein und eine rechteckige untere Andruckfläche enthalten. Auch andere, an die jeweiligen Bearbeitungsanforderungen angepassten Formen des Bearbeitungskopfs sind möglich.

Der Andruckkopf kann einteilig mit dem fingerförmigen Andruckelement ausgebildet sein. Zur einfachen Auswechslung kann der Andruckkopf aber auch lösbar mit dem Andruckelement verbunden sein. Der Andruckkopf kann fest mit dem Andruckelement verbunden oder auch pendelnd gelagert sein.

Bei der erfindungsgemäßen Laserbearbeitungsanlage werden alle Verfahrbewegungen in den drei zueinander rechtwinkligen Achsen vom Bearbeitungskopf durchgeführt. Die Verfahrbewegungen in den Horizontalachsen können aber auch von dem Werkstück bzw. der Werkstückauflage durchgeführt werden, so dass der Bearbeitungskopf nur in der Z-Achse bewegt werden muss.

Weitere Besonderheiten und Vorzüge der Erfindung ergeben sich aus der folgenden Beschreibung bevorzugter Ausführungsbeispiele anhand der Zeichnung. Es zeigen:
- **Figur** 1: einen Teil einer erfindungsgemäßen Laserbearbeitungsanlage mit einer Werkstückhalteinrichtung in einer Perspektivansicht;
- **Figur** 2: eine Detailansicht der Werkstückhalteeinrichtung von Figur 1 mit einem Andruckelement in einer ersten Ausführungsform;
- **Figur** 3: eine Detailansicht eines Andruckelements in einer zweiten Ausführungsform und
- **Figur** 4: eine Detailansicht eines Andruckelements in einer dritten Ausführungsform.

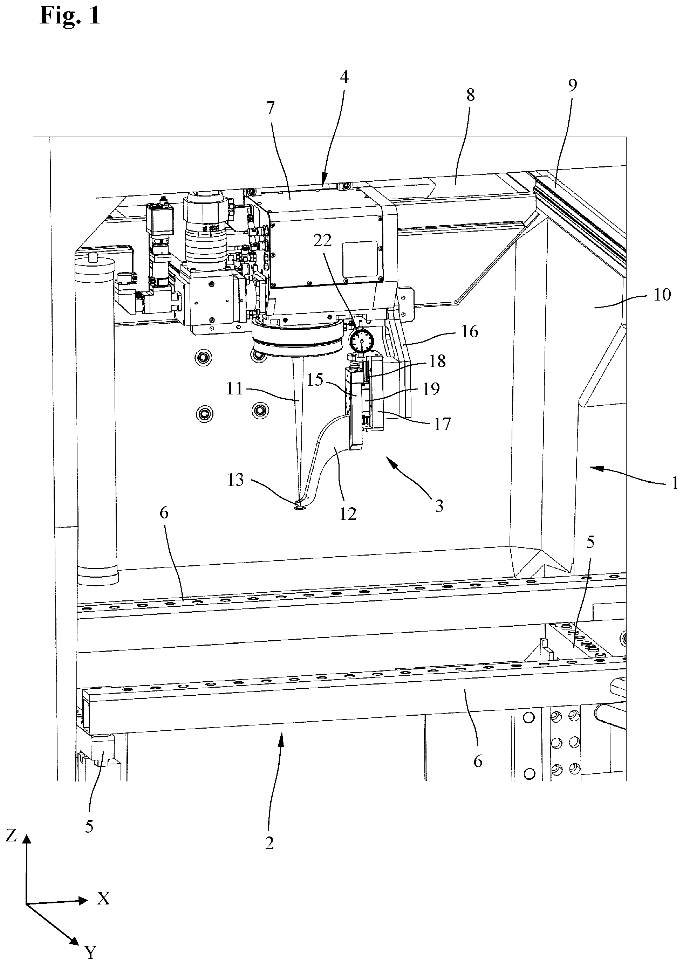

In Figur 1 ist ein Teil einer für das Laserschweißen konzipierten Laserbearbeitungsanlage mit einem Maschinenkörper 1, einer Werkstückauflage 2 zur Aufnahme eines zu bearbeitenden Werkstücks, einer Werkstückhalteeinrichtung 3 zur Halterung des Werkstücks und einem relativ zur Werkstückauflage 2 in mehreren Achsen verfahrbaren Bearbeitungskopf 4 in einer schematischen Perspektivansicht gezeigt. Die Werkstückauflage 2 enthält in der gezeigten Ausführung zueinander parallele schienenförmige Längs- und Querschienen 5 und 6, auf denen an die jeweilige Bearbeitungsaufgabe angepasste Werkstückaufnahmen für ein oder mehrere Werkstücke befestigbar sind.

Bei dem in Figur 1 gezeigten Ausführungsbeispiel einer Laserbearbeitungsanlage ist der Bearbeitungskopf 4 mit einer daran angeordneten und für die Durchführung einer Laserschweißbearbeitung ausgebildeten Laseroptik 7 über einen hier nicht gezeigten Kreuzschlitten an einem in einer horizontalen ersten Achse (Y-Achse) verfahrbaren Querträger 8 in einer zur ersten Achse rechtwinkligen zweiten horizontalen Achse (X-Achse) und einer zu der ersten und zweiten Achse rechtwinkligen dritten Achse (Z-Achse) verfahrbar angeordnet. Über entsprechende Antriebe und eine Steuerung kann der Bearbeitungskopf 4 relativ zur Werkstückauflage 2 positioniert und bewegt werden. Der Querträger 8 ist über horizontale Führungsschienen 9 auf zwei voneinander beanstandeten Seitenwangen 10 des Maschinenkörpers 1 in der X-Achse verschiebbar geführt. An dem am Querträger 8 in der X-und Z-Achse verfahrbar angeordneten Bearbeitungskopf 4 ist die Laseroptik 7 zur Fokussierung eines von einer Lasereinheit erzeugten Laserstrahls 11 auf das zu bearbeitende Werkstück befestigt. Durch eine Verfahrbewegung des Bearbeitungskopfs 4 in Richtung der vertikalen Z-Achse und ggf. auch durch eine Vertikalbewegung der Werkstückaufspanneinrichtung 2 kann der vertikale Abstand zwischen der Laseroptik 7 und einen auf der Werkstückauflage 2 angeordneten Werkstück eingestellt und verändert werden.

Bei der gezeigten Laserbearbeitungsanlage werden alle Verfahrbewegungen in den drei zueinander rechtwinkligen Achsen vom Bearbeitungskopf 4 durchgeführt. Die Verfahrbewegungen in den Horizontalachsen können aber auch von dem Werkstück bzw. der Werkstückauflage 2 durchgeführt werden, so dass der Bearbeitungskopf 4 z.B. nur in der Z-Achse bewegt werden muss.

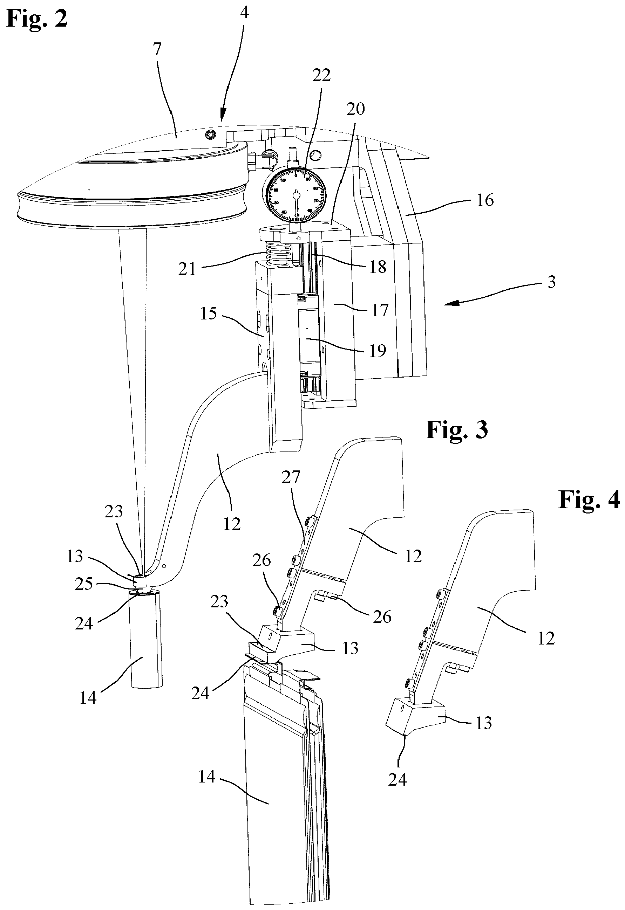

Wie aus Figur 2 hervorgeht, weist die Werkstückhalteeinrichtung 3 ein am Bearbeitungskopf 4 angeordnetes fingerförmiges Andruckelement 12 mit einem unteren Andruckkopf 13 zur Auflage auf einem zu bearbeitenden Werkstück 14 auf. Das fingerförmige Andruckelement 12 ist so konzipiert, dass der untere Andruckkopf 13 im Bereich der Fokuslage des durch die Laseroptik 7 auf das Werkstück fokussierten Laserstrahls 11 auf dem zu bearbeitenden Werkstück 14 zur Anlage gelangt. Das fingerförmige Andruckelement 12 weist einen bogenförmigen Verlauf auf und ist über einen oberen Aufnahmekörper 15 und eine Linearführung in Richtung der Z-Achse vertikal verschiebbar an einer am Bearbeitungskopf 4 befestigten Halterung 16 geführt. Der Verlauf des fingerförmigen Andruckelements 12 muss jedoch nicht zwingend bogenförmig sein.

Die Linearführung enthält einen über eine Halterung 16 am Bearbeitungskopf 4 befestigten Führungskörper 17 und einen über Führungsschienen 18 am Führungskörper 17 verschiebbar geführten Führungsschlitten 19, an dem der Aufnahmekörper 15 für das gebogene fingerförmige Andruckelement 12 befestigt ist. Zwischen dem Aufnahmekörper 15 und einer oberen Seitenplatte 20 des Führungskörpers 17 ist ein hier als Feder ausgebildetes Druckerzeugungselement 21 angeordnet. Durch das hier als Feder ausgebildete Druckerzeugungselement 21 kann ein Höherausgleich des Andruckelements 12 erreicht und eine definierte Anpresskraft sichergestellt werden. An der oberen Seitenplatte 20 des Führungskörpers 17 ist außerdem eine hier als Messtaster ausgebildete Mess- und Anzeigeeinrichtung 22 zur Erfassung und Anzeige der Verfahrbewegung des Andruckelements 12 angeordnet. Durch die Mess- und Anzeigeeinrichtung 22 kann der Abstand des Bearbeitungskopfs 4 vom Werkstück 14 und damit die Fokuslage indirekt erfasst und kontrolliert werden. Bei Bedarf kann so die vertikale Position des Bearbeitungskopfs 4 in der Z-Achse korrigiert und nachjustiert werden.

In dem Ausführungsbeispiel von Figur 2 ist der Andruckkopf 13 kreisring- oder hülsenförmig ausgebildet und einteilig mit dem Andruckelement 12 ausgeführt. Der Andruckkopf 13 weist einen zentralen Durchgang 23 und eine untere kreisrunde Andruckfläche 24 auf. In der gezeigten Ausführung enthält der Andruckkopf 13 eine Andruckhülse 25, die den Durchgang 23 und die untere Andruckfläche 24 bildet. Durch den Durchgang 23 kann der Laserstrahl 11 auf die Schweißstelle an der Oberseite des hier zylindrischen Werkstücks 14 gerichtet werden. Mit Hilfe der Andruckhülse 25 kann das Werkstück 14 um die zentrale Schweißstelle herum ringförmig angedrückt werden, so dass an der Schweißstelle ein durchgehender und positionsgenauer Anpressdruck zur spaltfreien Verbindung erreicht werden kann. Die Andruckhülse 25 kann in dem Andruckkopf 13 integriert oder fest in den Andruckkopf 13 eingesetzt sein. Zur Ausgleichung von Unebenheiten kann die Andruckhülse 25 aber auch pendelnd in dem Andruckkopf 13 gelagert sein. Auch das fingerförmige Andruckelement 12 kann bei Bedarf pendelnd in dem Aufnahmekörper 15 gelagert sein, so dass es Unebenheiten ausgleichen bzw. sich entsprechend anpassen kann.

Wenn bei dem in Figur 2 gezeigten Ausführungsbeispiel der Bearbeitungskopf 4 in die für eine Schweißbearbeitung erforderliche Position verfährt, wird automatisch auch das fingerförmige Andruckelement 12 mit dem Andruckkopf 13 in unmittelbarer Nähe der Schweißstelle positioniert. Das zu schweißende Werkstück wird von dem Andruckkopf 13 des Andruckelements 12 um die Schweißstelle herum mit einer definierten Andruckkraft angedrückt.

Bei einem in Figur 4 gezeigten weiteren Ausführungsbeispiel sind das Andruckelement 12 und der Andruckkopf 13 als gesonderte Bauteile ausgeführt. Der Andruckkopf 13 ist lösbar an dem fingerförmigen Andruckelement 12 befestigt und kann somit bei Bedarf einfach ausgetauscht werden. In der gezeigten Ausführung ist der Andruckkopf 13 über Schrauben 26 und ein blechförmiges Verbindungsteil 27 lösbar mit dem Andruckelement 12 verbunden. Im Unterschied zur Ausführung von Figur 3 ist der Andruckkopf 13 blockförmig ausgebildet und weist eine rechteckige untere Andruckfläche 24 auf. Der Andruckkopf 13 enthält einen rechteckigen Durchgang 23, durch den der Laserstrahl zum Schweißen gerichtet werden kann. Dadurch kann ein oberer Steg des in Figur 4 gezeigten Werkstücks 14 gegen einen unteren Steg gedrückt und mit diesem verschweißt werden.

Auch bei der in Figur 5 gezeigten Ausführung ist der Andruckkopf 13 blockförmig ausgebildet und weist eine rechteckige untere Andruckfläche 25 auf. Im Unterschied zur Ausführung von Figur 4 enthält der Andruckkopf 13 keinen Durchgang, so dass eine Schweißung nur neben dem Andruckkopf 13 erfolgen kann.

### Bezugszeichenliste

- 1: Maschinenkörper
- 2: Werkstückauflage
- 3: Werkstückhalteeinrichtung
- 4: Bearbeitungskopf
- 5: Längsschiene
- 6: Querschiene
- 7: Laseroptik
- 8: Querträger
- 9: Führungsschiene
- 10: Seitenwange
- 11: Laserstrahl
- 12: Andruckelement
- 13: Andruckkopf
- 14: Werkstück
- 15: Aufnahmekörper
- 16: Halterung
- 17: Führungskörper
- 18: Führungsschiene
- 19: Führungsschlitten
- 20: Seitenplatte
- 21: Druckerzeugungselement
- 22: Mess- und Anzeigeeinrichtung
- 23: Durchgang
- 24: Andruckfläche
- 25: Andruckhülse
- 26: Schraube
- 27: Verbindungsteil

## Patentansprüche

1. Laserbearbeitungsanlage mit einer Werkstückauflage (2) für die Aufnahme eines zu bearbeitenden Werkstücks (14), einer Werkstückhalteeinrichtung (3) zur Halterung des zu bearbeitenden Werkstücks (14) und einem relativ zur Werkstückauflage (2) verfahrbaren Bearbeitungskopf (4), an dem eine Laseroptik (7) zur Fokussierung eines Laserstrahls (11) auf das zu bearbeitende Werkstück (14) angeordnet ist, wobei die Werkstückhalteeinrichtung (3) ein am Bearbeitungskopf (4) angeordnetes Andruckelement (12) mit einem zur Auflage auf dem Werkstück (14) im Bereich der Fokuslage des Laserstrahls (11) gelangenden Andruckkopf (13) enthält, **dadurch gekennzeichnet, dass** das Andruckelement (12) über eine Linearführung (17, 18, 19) vertikal verschiebbar am Bearbeitungskopf (4) angeordnet ist.

2. Laserbearbeitungsanlage nach Anspruch 1, **dadurch gekennzeichnet, dass** das Andruckelement (12) derart ausgebildet ist, dass der Andruckkopf (13) im Bereich der Fokuslage des durch die Laseroptik (7) auf das Werkstück (14) fokussierten Laserstrahls (11) angeordnet ist.

3. Laserbearbeitungsanlage nach Anspruch 3, **dadurch gekennzeichnet, dass** die Linearführung (17, 18, 19) einen am Bearbeitungskopf (3) angeordneten Führungskörper (17) und einen am Führungskörper (17) über Führungsschienen (18) verschiebbar geführten Führungsschlitten (19) enthält.

4. Laserbearbeitungsanlage nach Anspruch 3, **dadurch gekennzeichnet, dass** das Andruckelement (12) über einen Aufnahmekörper (15) an dem Führungsschlitten (19) befestigt ist.

5. Laserbearbeitungsanlage nach einem der Ansprüche 1 bis 4, **dadurch gekennzeichnet, dass** an der Linearführung (17, 18, 19) eine Mess- und Anzeigeeinrichtung (22) zur Erfassung und Anzeige der Bewegung des Andruckelements (12) gegenüber dem Bearbeitungskopf (4) angeordnet ist.

6. Laserbearbeitungsanlage nach einem der Ansprüche 1 bis 5, **dadurch gekennzeichnet, dass** dem Andruckelement (12) ein Druckerzeugungselement (21) zur Erzeugung eines Anpressdrucks zugeordnet ist.

7. Laserbearbeitungsanlage nach einem der Ansprüche 1 bis 6, **dadurch gekennzeichnet, dass** der Andruckkopf (13) einen Durchgang (23) für den Laserstrahl (11) aufweist.

8. Laserbearbeitungsanlage nach einem der Ansprüche 1 bis 7, **dadurch gekennzeichnet, dass** der Andruckkopf (13) ringförmig ausgebildet ist und eine kreisringförmige untere Andruckfläche (24) aufweist.

9. Laserbearbeitungsanlage nach einem der Ansprüche 1 bis 7, **dadurch gekennzeichnet, dass** der Andruckkopf (13) blockförmig ausgebildet ist und eine rechteckige untere Andruckfläche (24) aufweist.

10. Laserbearbeitungsanlage nach einem der Ansprüche 1 bis 9, **dadurch gekennzeichnet, dass** der Andruckkopf (13) einteilig mit dem Andruckelement (12) ausgebildet ist.

11. Laserbearbeitungsanlage nach einem der Ansprüche 1 bis 10, **dadurch gekennzeichnet, dass** der Andruckkopf (13) lösbar mit dem Andruckelement (12) verbunden ist.
